# EUROPEAN PATENT APPLICATION

(11) **EP 4 818 916 A1**
(43) Date of publication of application: **07.10.2026**
(21) Application number: 26169343.6
(22) Date of filing: 30.03.2026
(51) Int. Cl.: G06F 13/38, G06F 13/40, G06F 13/42, H04L 12/40, H04L 12/46, G06F 13/12, H04L 69/08, H04J 3/06, H04L 45/302

(54) **SMALL FORM-FACTOR PLUGGABLE DEVICE**

(30) Priority: 04.04.2025 US 202563783658 P; 20.06.2025 US 202519243932
(71) Applicant: Schweitzer Engineering Laboratories, Inc., Pullman, WA 99163 (US)
(72) Inventor: Rippon, Daniel, Pullman (US); Bethmann, Glenn, Pullman (US); Eggers, Brian, Pullman (US)
(74) Representative: Smith, Jeremy Robert

(57) **Abstract**

This disclosure relates to small form-factor pluggable, SFP, devices. Devices consistent with the present disclosure may be tailored to operate in critical infrastructure systems, such as electric power systems. In one embodiment, a serial-to-Ethernet SFP device (100) includes a serial connector (102) to communicatively couple the SFP device (100) to a serial device, and an SFP connector (116) to communicatively couple the SFP device (100) to a host device to receive a stream of Ethernet data. A logic engine (110, 112) may identify a first data type of an Ethernet data frame in the stream of Ethernet data received via the SFP connector (116) and decode an Ethernet data frame to extract a payload (120). The logic engine (110,112) may determine that the payload is to be routed via the serial connector, and generate a serial signal for transmission via the serial connector (102) and comprising the payload. A serial driver (106) may transmit the serial signal via the serial connector (102).

## Description

### TECHNICAL FIELD

This disclosure relates to small form-factor pluggable ("SFP") devices. More specifically but not exclusively, the systems and methods disclosed herein relate to the serial-to-Ethernet SFP devices tailored to operate in critical infrastructure systems, such as electric power systems.

### BRIEF DESCRIPTION OF THE DRAWINGS

Non-limiting and non-exhaustive embodiments of the disclosure are described, including various embodiments of the disclosure with reference to the figures, in which:
**Figure 1** illustrates a functional block diagram of a serial-to-Ethernet SFP device consistent with embodiments of the present disclosure.
**Figure 2** illustrates a conceptual representation of a system comprising a plurality of serial-connected intelligent electronic devices (IEDs) consistent with embodiments of the present disclosure.
**Figure 3A** illustrates a system for distributing a timing signal from a Precision Time Protocol ("PTP") grandmaster clock to an IED via a serial connection consistent with embodiments of the present disclosure.
**Figure 3B** illustrates a data flow for generating a time signal for distribution using a serial connection consistent with embodiments of the present disclosure.
**Figure 4** illustrates a flow chart for processing an incoming data stream to an SFP device consistent with embodiments of the present disclosure.
**Figure 5** illustrates a flow chart for processing an outgoing data stream from an SFP device consistent with embodiments of the present disclosure.

In the following description, numerous specific details are provided for a thorough understanding of the various embodiments disclosed herein. However, those skilled in the art will recognize that the systems and methods disclosed herein can be practiced without one or more specific details, or with other methods, components, materials, etc. In addition, in some cases, well-known structures, materials, or operations may not be shown or described in detail to avoid obscuring aspects of the disclosure. Furthermore, the described features, structures, or characteristics may be combined in any suitable manner in one or more alternative embodiments.

### DETAILED DESCRIPTION

Equipment used in electric power systems and other types of infrastructure have a long service life, and thus compatibility is a challenging issue. Serial communication has been used for an extended time. Incorporating options for supporting legacy devices that rely on serial communication is important for continuity of operation despite shifts toward newer communication protocols and technologies (e.g., Ethernet, fiberoptic, etc.).

Network hardware, such as Ethernet switches, used in infrastructure systems may include an SFP interface. SFP interfaces may receive SFP devices consistent with the present disclosure to enable serial communication. Although the term SFP is used throughout, it should be understood that the term SFP includes a variety of types of SFP devices, form factors, and data speeds (e.g., SPF+, QSFP, QSFP28, etc.). Moreover, the concepts disclosed herein are generally applicable to other types of pluggable devices.

SFP offers a variety of advantages, including wide adoption, compact form factor, and hot-swap capabilities. Moreover, SFP devices may offer performance characteristics adapted for use in critical infrastructure applications. Among other things, significant performance characteristics for use in critical infrastructure applications include wide temperature operating ranges, long mean time between failures, and high reliability. Industrial-rated SFPs may operate between -40° C and 85° C. Various embodiments consistent with the present disclosure comprise ruggedized designs to withstand harsh conditions in which crucial infrastructure may operate.

SFP devices consistent with the present disclosure may facilitate the integration of serial devices into an Ethernet-based communication network. In various embodiments, an SFP device may offer a self-contained solution. Such embodiments may provide both the physical interface and protocol translation to enable plug-and-play operation. Other embodiments may leverage additional resources beyond the SFP device. For example, in various embodiments, SFP devices may offload certain tasks to a host device to enable a broader range of functions and features.

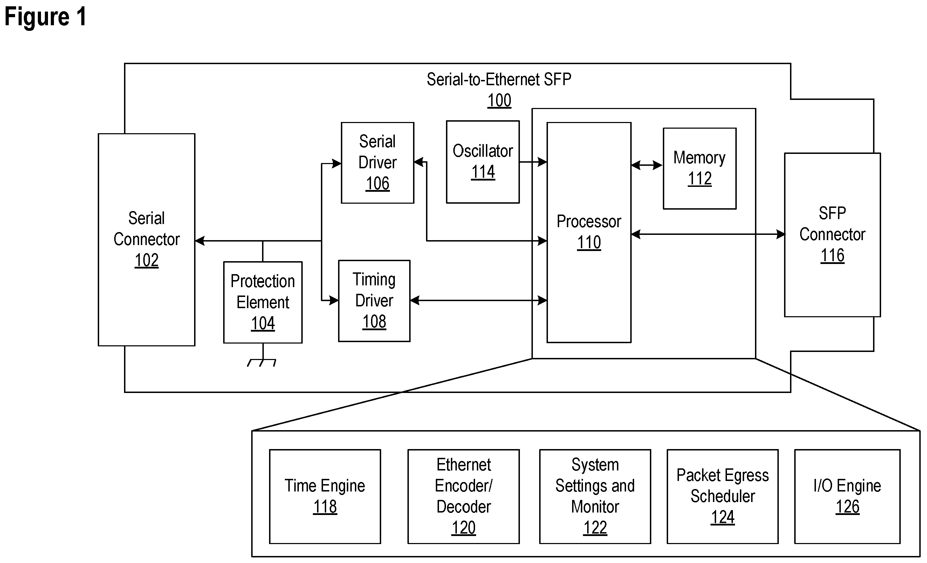

**FIG. 1** illustrates a functional block diagram of a serial-to-Ethernet SFP device 100 consistent with embodiments of the present disclosure. Serial-to-Ethernet SFP device 100 may receive a serial signal via serial connector 102. In various embodiments, serial connector 102 may comprise a variety of physical interfaces (e.g., an RJ45 connector, a DE-9 connector, DB25, Universal Serial Bus ("USB"), etc.). Serial-to-Ethernet SFP device 100 may receive various types of serial communication standards, such as RS232 and RS485.

A protection element 104 may offer electrical protection for Serial-to-Ethernet SFP device 100. For example, protection element 104 may offer electrostatic discharge protection. Protection element 104 may be in electrical communication with serial connector 102.

A serial driver 106 may generate electrical signals for transmission via serial connector 102. Such signals may include information received via SFP connector 116 or generated by serial-to-Ethernet SFP device 100. Similarly, a timing driver 108 may generate electrical signals for transmission via serial connector 102 that relate to a time signal.

A processor 110 may process communications received via serial connector 102 and SFP connector 116. Processor 110 may operate using any number of processing rates and architectures. Processor 110 may perform various algorithms and calculations described herein. Processor 110 may be embodied as a general-purpose integrated circuit, an application-specific integrated circuit, a field-programmable gate array, and/or any other suitable programmable logic device.

Instructions to be executed by processor 110 may be stored in memory 112. Memory 112 may be embodied using a variety of types of computer-readable storage media, including random access memory (RAM) and non-transitory memory. Memory 112 may be the repository of software modules configured to implement the functionality described herein. In some embodiments, memory 112 may comprise NOR flash memory, which may allow direct random access by processor 110. Other types of memory (e.g., NAND flash memory) may also be used.

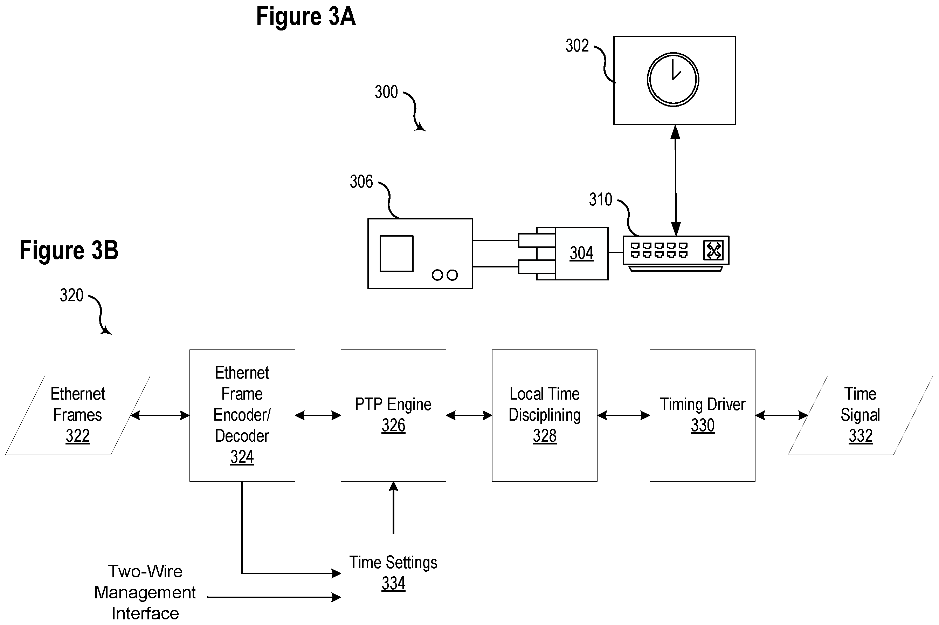

Processor 110 and memory 112 may operate in conjunction to enable a variety of features and functions, including a time engine 118, an Ethernet encoder/decoder 120, system settings and monitor 122, a packet egress scheduler 124, and an input/output ("IO") engine 126. Time engine 118 may enable serial-to-Ethernet SFP device 100 to receive time signals in one format and translate the time signal to another format for transmission to a device connected to serial connector 102, as discussed in greater detail in connection **Figure 3A** and **Figure 3B****.**

Ethernet encoder/decoder 120 enables serial-to-Ethernet SFP device 100 to receive information in an Ethernet frame and transmit such information via serial connector 102, or vice versa. Ethernet frames may include various types of information, including source and routing information, quality of service information, Ethertype information, a payload, redundancy information, and sequence information. The payload carries information to be transmitted to a recipient. The other information (e.g., source and routing, quality of service, redundancy, etc.) is typically unrelated to the payload. Information from the payload of an Ethernet frame may be extracted and retransmitted in a different format via serial connector 102.

An oscillator 114 may provide a clock signal to processor 110 and that may be used to synchronize the operations of serial-to-Ethernet SFP device 100.

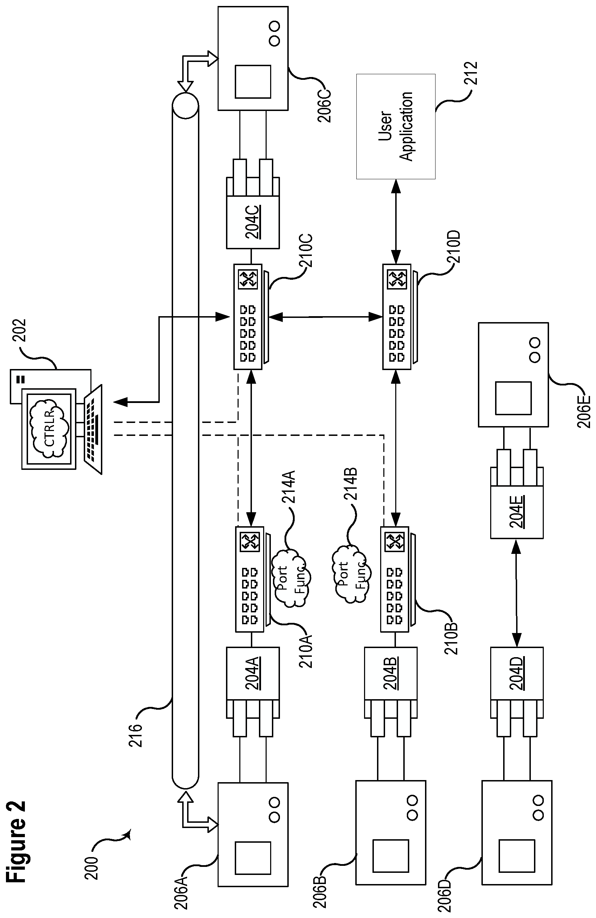

**FIG. 2** illustrates a conceptual representation of a system 200 comprising a plurality of serial-connected IEDs 206A-E consistent with embodiments of the present disclosure. A network controller 202 may coordinate the operation of system 200. In one embodiment, network controller 202 may provide an interface for a user to input various settings. For example, a user may enter a network topology, including the settings/configuration/behavior for each Serial SFP module, using network controller 202. Network controller 202 may create and distribute configuration information based on the user-provided input for the devices in system 200. The configuration may primarily be implemented during the commissioning of system 200. Of course, the configuration of system 200 may be modified over time.

The plurality of serial-connected IEDs 206A-E may monitor and control other equipment, such as equipment in an electric power system. For example, IEDs 206A-E may operate within a substation of a power system and monitor equipment in the substation (e.g., the operation of a transformer, current flowing through distribution feeders, voltages and currents of an electrical bus, etc.). System 200 may also be deployed in other fields, such as telecommunications, manufacturing, etc.

A plurality of serial SFP devices 204A-204E are distributed throughout system 200. SFP devices 204A-E may enable communication by the plurality of serial-connected IEDs 206A-206E using other communication protocols and interfaces. In some embodiments, the plurality of serial SFP devices 204A-204E may store configuration settings received from network controller 202. In other embodiments, a host device may store the settings received from network controller 202 for an associated device. For example, switch 210A may store the settings of SFP device 204A. In various embodiments, network controller 202 may use a two-wire interface ("TWI") to communicate settings to devices in system 200.

A plurality of network switches 210A-210D may host various SFP devices (e.g., SFP devices 204A-204C) and facilitate communication with system 200. Network switches 210A-210C may host SFP devices 204A-204C, respectively. Network switches 210A-210C may enable communication among IEDs 206A-206C and user application 212. Network switches 210A-210D may be connected via Ethernet, which is shown as solid lines with arrows on each end.

A communication tunnel 216 between IED 206A and IED 206C may be made using SFP devices 204A and 204C, and switches 210A and 210C. Communication tunnel 216 may be transparent to IED 206A and 206D. In other words, communication tunnel 216 may allow IED 206A and IED 206D to communicate as if the devices were directly connected via a serial connection and without changes to device settings or configuration. Transparency may be achieved by encapsulating information sent by IED 206A within the payload of one or more packets of an Ethernet data stream. The Ethernet packets may be routed to IED 206C, and the payload may be extracted. The information sent by IED 206A may then be transmitted to IED 206C.

IED 206B communicates with a user application 212 in the illustrated embodiment. For example, switch 210B may provide a Telnet server to which the user application 212 connects and handles serial data communication. IED 206B may also connect to the Telnet server provided by switch 210B and use it to communicate with user application 212. In one specific embodiment, user application 212 may be able to monitor and transmit data on the serial link and using the Ethernet network. In the illustrated embodiment, a port function 214A and 214B service running on switches 210A and 210B may enable such functions.

Port functions 214A and 214B may also include other functions offered by stand-alone port servers, but without requiring a separate device. Incorporating such features into embodiments consistent with the present disclosure avoids the expense of additional hardware and reduces the configuration burden of implementing such functions. Port functions 214A and 214B may enable one serial device (e.g., IED 206A to transmit to many other devices. Serial communication is typically point-to-point, or one-to-one communication; however, systems consistent with the present disclosure may enable one-to-many communication schemes.

IED 206D is connected to IED 206E using SFP devices 204D and 204E without intermediary network devices in a point-to-point connection. In this case, the host device(s) (*i.e.,* 206D or 206E) may configure the SFP devices (204D or 204E) to bypass the Ethernet encapsulation and operate in a direct serial mode over an Ethernet. For example, SFP devices 204D and 204E may each comprise an RJ45 connection and a Cat6 cable may be the physical medium for communication.

In a bypass configuration, as shown with SFP devices 204D and 204E, the format of communication may remain unchanged; however, the parameters of the communications may differ. For example, the voltage for communication between serial device 206D and SFP device 204D may be about +3.3 volts, while the voltage for communication between SFP device 204D and SFP device 204E may be about ±10 volts. Such a pass-through configuration may allow for arbitrary control over communication by serial devices 206D and 206E. Such freedom may be useful because some applications operating over a serial channel have demanding parameters (*e.g*., latency, jitter, etc.) and that may be impacted by encapsulation of serial communication in Ethernet frames. One specific example is the Mirrored Bits^{®} protocol offered by Schweitzer Engineering Laboratories of Pullman, Washington. As such, a pass-through configuration may expand potential use cases for devices consistent with the present disclosure.

Network controller 202 may communicate one or more system settings of SFP devices 204A-204C. The dashed lines in **Figure 2** illustrate control communications between network controller 202 and SFP devices 204A-204C. SFP devices 204A-204C may implement a command or a control/configuration communication from network controller 202. For example, network controller 202 may establish a communication tunnel 216 between 206A and 206C by establishing communication flows between the two devices. Alternatively, or in addition, communications from SFP device 206A could be routed to SFP device 206B based on commands from network controller 202.

**Figure 3A** illustrates a system for distributing a timing signal from a PTP grandmaster clock 302 to an IED 306 via a serial connection consistent with embodiments of the present disclosure. PTP, which is also known as IEEE 1588, is a network synchronization protocol that offers sub-microsecond accuracy. A time signal generated by PTP grandmaster clock 302 may be used for time-synchronization in an Ethernet network. Although PTP is specifically illustrated, as one of skill in the art will appreciate, other protocols may also be used, such as Simple Network Time Protocol ("SNPT"), Network Time Protocol ("NTP"), etc.

A switch 310 may receive a time signal from PTP grandmaster clock 302 and make the signal available to connected devices, including SFP device 304. Among other things, SFP devices consistent with the present disclosure may be configured to distribute a PTP time signal. Such a time signal may be provided in addition to, or independent of, other types of serial data.

SFP device 304 may receive the PTP time signal and generate a time signal for use by IED 306. A variety of types of time signals may be generated and communicated to IED 306, including Inter-Range Instrumentation Group B ("IRIG-B"), Pulse Per Second ("PPS"), etc. PTP grandmaster clock 302 may be transparent to IED 306.

**Figure 3B** illustrates a data flow 320 for generating a time signal for distribution using a serial connection consistent with embodiments of the present disclosure. A stream of Ethernet frames 322 comprising a PTP time signal may be received from a PTP time source. The frames may be decoded at 324. Information from the decoded frames may be provided to a PTP clock algorithm. The PTP engine 326 may operate according to the specifications of IEEE 1588.

A device implementing data flow 320 may use the output of PTP engine 326 to generate a time signal suitable for distribution via a serial connection. The PTP time signal may be provided for local time disciplining 328. Disciplining the local time comprises adjusting a system time and/or oscillator frequency on the device implementing data flow 320 to compensate for offset or frequency errors. A timing driver 330 may generate a time signal 332 in a desired format for distribution to a serial device communicatively coupled to a serial communication interface. For example, time signal 332 may be an IRIG-B signal in some embodiments.

Data flow 320 may include time settings 334 allowing a user to customize data flow 320. The time settings 334 may be received via Ethernet frames 322 or a two-wire management interface. Among other things, time settings 334 may allow users to select a format for the time signal 332.

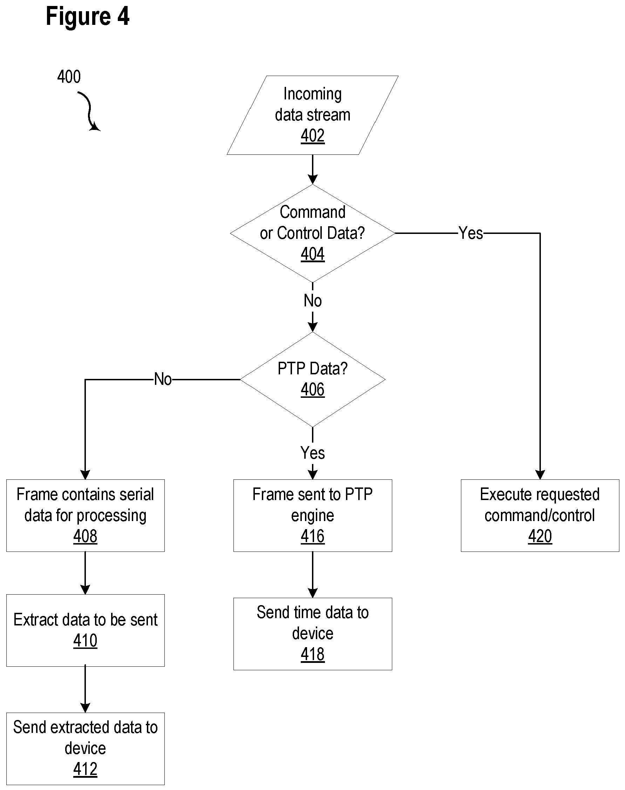

**Figure 4** illustrates a flow chart for processing an incoming data stream 402 to an SFP device consistent with embodiments of the present disclosure. In some embodiments, method 400 may be implemented by an SFP device, such as serial-to-Ethernet SFP device 100, illustrated in **Figure 1****.** The incoming data stream 402 may comprise Ethernet frames and communications from other interfaces (*e.g*., a two-wire interface). Moreover, the incoming data stream 402 may comprise at least three categories of information, including command and control data, PTP data, and data destined to a device connected via a serial communication channel.

At 404, method 400 may identify command and control data. If the incoming data comprises command and control data, it may be executed or implemented at 420. Examples of commands may include changing a mode of the device (e.g., streaming, serial, input/output, time signal distribution, etc.), changing settings (*e.g*., a baud rate), changing logic, updating configuration settings, reading/setting input/output values, etc.

At 406, method 400 may determine if a frame in the incoming data stream comprises PTP data 406. The Ethertype information in an Ethernet frame may identify PTP data. Frames identified as PTP data may be sent to a PTP engine at 416. Time information based on the PTP data may be sent to a device at 418 via a serial time code connection.

At 408, a data frame containing data may be processed. At 410, data from the packet may be extracted. At 412, the extracted data may be sent to a device via a serial device.

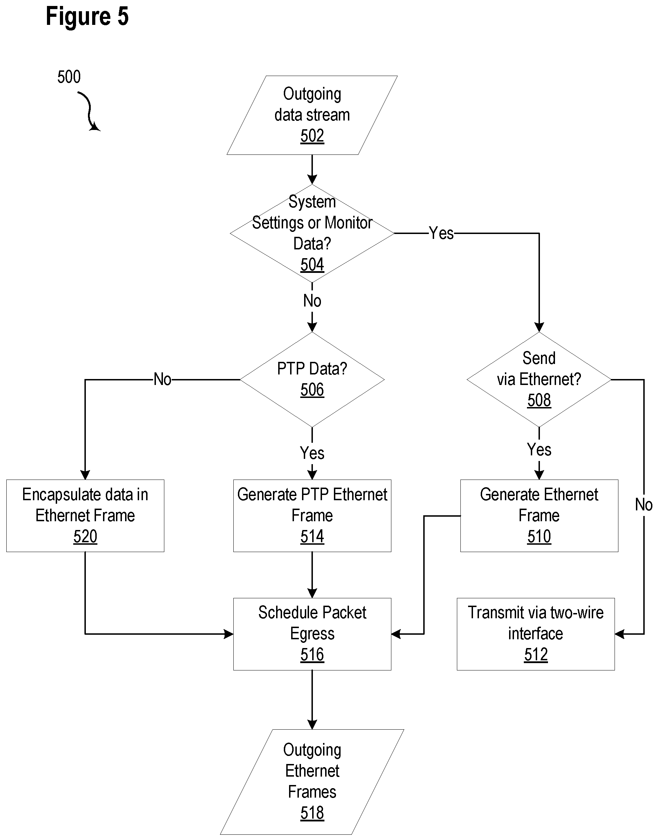

**Figure 5** illustrates a flow chart for processing an outgoing data stream 502 from an SFP device consistent with embodiments of the present disclosure. The outgoing data may originate from various sources in a system implementing method 500, namely a device connected via a serial communication channel, a PTP engine, and a systems settings and monitor.

At 504, method 500 may identify system settings or monitor data. As discussed above, systems consistent with the present disclosure may utilize Ethernet or a two-wire interface to receive certain commands or data. The two interfaces may also be used for data transmission. At 508, method 500 may determine whether such data is to be sent via Ethernet. An Ethernet frame may be generated at 510 for data sent via Ethernet. Data sent via the two-wire interface may be sent at 512.

At 506, method 500 may determine if the outgoing data stream comprises PTP data. If so, a PTP Ethernet frame may be generated at 514. A PTP engine, such as PTP engine 326 illustrated in **Figure 3B****,** may be used in various embodiments to generate a PTP packet.

If the data is neither system settings nor PTP data, the information may be encapsulated in an Ethernet frame at 520. The egress of Ethernet frames generated at 520, 514, or 510 may be scheduled at 516, and the outgoing Ethernet frames 518 may be transmitted via the Ethernet interface.

In various embodiments, disclosed is a serial-to-Ethernet Small Form Pluggable ("SFP") device comprising: a serial connector to communicatively couple the SFP device to a serial device; an SFP connector to communicatively couple the SFP device to a host device to receive a stream of Ethernet data; a logic engine in communication with the serial connector and the SFP connector to: identify a first data type of an Ethernet data frame in the stream of Ethernet data received via the SFP connector; decode an Ethernet data frame to extract a payload; determine that the payload is to be routed via the serial connector; and generate a serial signal for transmission via the serial connector and comprising the payload; and a serial driver to transmit the serial signal via the serial connector. The logic engine may be operable to: determine that the type of the Ethernet data frame comprises a time signal; and generate a representation of the time signal for transmission via the serial connector to the serial device. The serial-to-Ethernet SFP device may further comprise a timing driver in electrical communication with the serial connector to transmit the representation of the time signal via the serial connector to the serial device. The time signal may comprise a Precision Time Protocol signal and the representation of the time signal comprises an Inter-Range Instrumentation Group B ("IRIG-B") signal. The serial-to-Ethernet SFP device may further comprise an oscillator and wherein the oscillator is disciplined using the time signal. The first data type may comprise a system setting from a network controller and the logic engine is further operable to configure the SFP device based on the system setting. The system setting from the network controller may comprise a destination for serial data received from the serial device via the serial connector. The logic engine may further be operable to: identify a second data type of serial data received from the serial device via the serial connector; encapsulate the serial data received from the serial device via the serial connector in an Ethernet frame; and transmit the Ethernet frame in the stream of Ethernet data. The stream of Ethernet data to the serial device may be transparent to the serial device. The logic engine may be further operable to offload at least one task of the logic engine to the host for execution. The device may be ruggedized and adapted for operation in an electric power system.

According to various embodiments, the invention may be a method, comprising: communicatively coupling an SFP device to a serial device using a serial connector to communicatively couple to a serial device; communicatively coupling the SFP device to a host device to receive a stream of Ethernet data; identifying a first data type of an Ethernet data frame in the stream of Ethernet data received via the SFP connector; decoding an Ethernet data frame to extract a payload; determining that the payload is to be routed via the serial connector; generating a serial signal for transmission via the serial connector and comprising the payload; and transmitting, using a serial driver, the serial signal via the serial connector. The method may further comprise determining that the type of the Ethernet data frame comprises a time signal; and generating a representation of the time signal for transmission via the serial connector to the serial device. The method may further comprise transmitting, using a timing driver in electrical communication with the serial connector, the representation of the time signal via the serial connector to the serial device. The method may further comprise receiving a system setting from a network controller and configuring the SFP device based on the system setting. The method may further comprise identifying a second data type of serial data received from the serial device via the serial connector; encapsulating the serial data received from the serial device via the serial connector in an Ethernet frame; and transmitting the Ethernet frame in the stream of Ethernet data. The stream of Ethernet data to the serial device may be transparent to the serial device. The method may further comprise offloading at least one task of a logic engine to the host for execution. The device may be ruggedized and adapted for operation in an electric power system.

Various embodiments may include a system, comprising: a first SFP device comprising: a first serial connector to communicatively couple the first SFP device to a first serial device; a first SFP connector; a second SFP device comprising: a second serial connector to communicatively couple the second SFP device to a second serial device; a second SFP connector to communicatively couple the second SFP device to the first SFP connector; wherein the first SFP device and the second SFP device operate in a passthrough mode in which communications from the first serial device are communicated to the second serial device transparently to both the first SFP device and the second SFP device.

While specific embodiments and applications of the disclosure have been illustrated and described, it is to be understood that the disclosure is not limited to the precise configurations and components disclosed herein. Accordingly, many changes may be made to the details of the above-described embodiments without departing from the underlying principles of this disclosure. Therefore, the scope of the present invention should be determined only by the following claims.

## Claims

1. A serial-to-Ethernet Small Form Pluggable ("SFP") device comprising:
a serial connector to communicatively couple the SFP device to a serial device;
an SFP connector to communicatively couple the SFP device to a host device to receive a stream of Ethernet data;
a logic engine in communication with the serial connector and the SFP connector to:
identify a first data type of an Ethernet data frame in the stream of Ethernet data received via the SFP connector;
decode an Ethernet data frame to extract a payload;
determine that the payload is to be routed via the serial connector; and
generate a serial signal for transmission via the serial connector and comprising the payload; and
a serial driver to transmit the serial signal via the serial connector.

2. The serial-to-Ethernet SFP device of claim 1, wherein the logic engine is further operable to:
determine that the type of the Ethernet data frame comprises a time signal; and
generate a representation of the time signal for transmission via the serial connector to the serial device.

3. The serial-to-Ethernet SFP device of claim 2, further comprising a timing driver in electrical communication with the serial connector to transmit the representation of the time signal via the serial connector to the serial device.

4. The serial-to-Ethernet SFP device of claim 2, wherein the time signal comprises a Precision Time Protocol signal and the representation of the time signal comprises an Inter-Range Instrumentation Group B ("IRIG-B") signal.

5. The serial-to-Ethernet SFP device of claim 2, further comprising an oscillator and wherein the oscillator is disciplined using the time signal.

6. The serial-to-Ethernet SFP device of claim 1, wherein the first data type comprises a system setting from a network controller and the logic engine is further operable to configure the SFP device based on the system setting.

7. The serial-to-Ethernet SFP device of claim 6, wherein the system setting from the network controller comprises a destination for serial data received from the serial device via the serial connector.

8. The serial-to-Ethernet SFP device of claim 1, wherein the logic engine is further operable to:
identify a second data type of serial data received from the serial device via the serial connector;
encapsulate the serial data received from the serial device via the serial connector in an Ethernet frame; and
transmit the Ethernet frame in the stream of Ethernet data.

9. The serial-to-Ethernet SFP device of claim 1, wherein communication of the stream of Ethernet data to the serial device is transparent to the serial device.

10. The serial-to-Ethernet SFP device of claim 1, wherein the logic engine is further operable to offload at least one task of the logic engine to the host for execution.

11. A method, comprising:
communicatively coupling an SFP device to a serial device using a serial connector to communicatively couple to a serial device;
communicatively coupling the SFP device to a host device to receive a stream of Ethernet data;
identifying a first data type of an Ethernet data frame in the stream of Ethernet data received via the SFP connector;
decoding an Ethernet data frame to extract a payload;
determining that the payload is to be routed via the serial connector;
generating a serial signal for transmission via the serial connector and comprising the payload; and
transmitting, using a serial driver, the serial signal via the serial connector.

12. The method of claim 11, further comprising:
determining that the type of the Ethernet data frame comprises a time signal; and
generating a representation of the time signal for transmission via the serial connector to the serial device.

13. The method of claim 12, further comprising:
transmitting, using a timing driver in electrical communication with the serial connector, the representation of the time signal via the serial connector to the serial device.

14. The method of claim 11, further comprising:
Identifying a second data type of serial data received from the serial device via the serial connector;
encapsulating the serial data received from the serial device via the serial connector in an Ethernet frame; and
transmitting the Ethernet frame in the stream of Ethernet data.

15. The method of claim 11, wherein communication of the stream of Ethernet data to the serial device is transparent to the serial device.
